(19) Europäisches Patentamt / European Patent Office / Office européen des brevets

(11) **EP 2 299 643 B1**

(12) **EUROPEAN PATENT SPECIFICATION**

(45) Date of publication and mention
of the grant of the patent:
**29.05.2013 Bulletin 2013/22**

(51) Int Cl.:
*H04L 29/06* ^(2006.01)          *H04L 29/08* ^(2006.01)

(21) Application number: **10152470.0**

(22) Date of filing: **03.02.2010**

(54) **Server load balancing method and system of media service**

Serverlastenausgleichsverfahren und System für Mediendienste

Procédé d'équilibrage de charge de serveur et système de service média

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.09.2009 KR 20090089084**

(43) Date of publication of application:
**23.03.2011 Bulletin 2011/12**

(73) Proprietor: **Electronics and Telecommunications
Research Institute
Daejeon 305-700 (KR)**

(72) Inventors:
• **Lee, Kang Yong
305-768, Daejeon (KR)**
• **Cho, Kee Seong
305-770, Daejeon (KR)**

(74) Representative: **Betten & Resch
Theatinerstrasse 8
80333 München (DE)**

(56) References cited:
**US-B1- 7 353 277**

• **WANG FEI ET AL: "Optimized file-blocking
storage scheme in clustered VoD system"
JISUANJI GONGCHENG = COMPUTER
ENGINEERING, SHANGHAI JISUANJI XUEHUI,
CH, vol. 34, no. 21, 5 November 2008 (2008-11-05),
pages 213-215, XP008126463 ISSN: 1000-3428**
• **WANG FEI ET AL: "Optimized File-Blocking
Storage Scheme in Clustered VoD System"
COMPUTER ENGINEERING,, vol. 34, no. 21, 1
November 2008 (2008-11-01), pages 1-10,
XP007915340**

**Description**

BACKGROUND

1. Field of the Invention

Embodiments of the present invention relate to a Server Load Balancing (SLB) method of a server providing a media service, and more particularly, to a method of predicting an available bandwidth and a queue time of a media server based on an operation characteristic of a user depending on media data having a fixed play time.

2. Description of the Related Art

Currently, an Internet Protocol Television (IPTV), a convergence model of broadcasting and communication, is the focus of attention as a new model in Internet services due to the development of Internet and multimedia contents.

An IPTV service may provide a variety of services such as an existing Internet Protocol (IP)-based bidirectional multimedia service, digital broadcasting, as well as multi-channel broadcasting, Video on Demand (VOD), Digital Video Recorder (DVR) services, and the like through a number of content providers using an IP-based network.

In a media service system via a network such as IPTV, a control server may retrieve and connect with a media server, suitable for a user, from a plurality of media servers according to a service request from the user, Also, the connected media server may provide the user with contents requested by the user.

However, since service requests from users may frequently concentrate in several contents due to a geographical distribution of users or popularity of content, a service request exceeding an available bandwidth of each media server may not be accepted.

Accordingly, a Server Load Balancing (SLB) method has been developed to prevent service requests from concentrating on a particular media server. However, a conventional SLB method may process service requests based on only available bandwidth and work load of current media servers. That is, when users connected to a particular media server terminate in the middle of service, the termination may not be recognized in real time, however, a bandwidth in an amount of a bandwidth of the terminated service becomes available. Accordingly, a media service request from another user may be frequently connected to another media server right before an available bandwidth is generated. Also, users may be required to be in queue due to the sudden termination even though a media server having an available bandwidth exists.

Thus, an SLB method that may select a media server where an available bandwidth may be generated since users terminate a service in the middle of the service by predicting an available bandwidth or a change of queue may be required.

WANG FEI ET AL: "Optimized file-blocking storage scheme in clustered VoD system" JISUANJI GONGCHENG = COMPUTER ENGINEERING, SHANGHAI JISUANJI XUEHUI, CH, vol. 34, no. 21, 5 November 2008 (2008-11-05), pages 213-215 discloses an optimized file-blocking storage scheme in clustered video-on-demand systems using a video-on-demand stopping probability model and a blocking scheme.

US 7,353,277 B1 discloses a distributed streaming media server system which comprises a plurality of streaming media servers, a master streaming media server and at least one streaming media client, wherein the master streaming media server includes a load poll thread, a load average queue and load average threads to determine the load balancing among the plurality of streaming media servers.

SUMMARY

The present invention is defined in the independent claims. The dependent claims define embodiments thereof.

An aspect of the present invention provides a Server Load Balancing (SLB) method that may predict a queue time of a user or an available bandwidth of a media server based on an operation characteristic of a user and media data having a fixed play time, and thereby may evenly distribute load of the media server.

According to an embodiment a Server Load Balancing (SLB) system of a media service includes: a plurality of media servers to replay media data, and to provide the media service; a control server to calculate a media service termination probability of a user depending on a media play time based on statistical information about a media service change pattern or habit of the user, to receive a media service request signal from a terminal of the user, to select a media server from the plurality of media servers based on the media service termination probability, and to connect the selected media server with the terminal of the user according to the media service request signal,

The control server may include: an available bandwidth determination unit to determine whether an available bandwidth, which is a remaining bandwidth, exists in the plurality of media servers, when the media service request signal is received; a bandwidth weight calculation unit to, when the available bandwidth exists in the media servers, calculate a bandwidth weight based on the media service termination probability, and to select a media server with a greatest bandwidth weight, the bandwidth weight being obtained by providing a weight to a bandwidth of each of the plurality of media servers; a queue time expectation calculation unit to, when the available bandwidth does not exist in the media servers, calculate an expectation with respect to a queue time remaining until the plurality of media servers provides the user with media services, based on the media service termination probability, and to select a media server with a smallest expectation with respect to the queue time; and a media server connection unit to connect the media server, selected by the bandwidth weight calculation unit, with the terminal of the user, or to register the media service request signal in a queue of the media server selected by the queue time expectation calculation unit.

According to an embodiment, there is provided an SLB method of a media service, the SLB method including: calculating a media service termination probability of a user depending on a media play time based on statistical information about a media service change pattern or habit of the user; determining whether an available bandwidth, which is a remaining bandwidth, exists in a plurality of media servers; calculating, when the available bandwidth exists in the media servers, a bandwidth weight based on the media service termination probability, and selecting a media server with a greatest bandwidth weight, the bandwidth weight being obtained by providing a weight to a bandwidth of each of the plurality of media servers; calculating, when the available bandwidth does not exist in the media servers, an expectation with respect to a queue time remaining until the plurality of media servers provides the user with the media services based on the media service termination probability, and selecting a media server with a smallest expectation with respect to the queue time; and connecting the media server, selected by a bandwidth weight calculation unit, with the terminal of the user, or registering a media service request signal in a queue of the media server selected by a queue time expectation calculation unit.

EFFECT

According to embodiments of the present invention, it is possible to predict a queue time or an available bandwidth of a media server based on an operation characteristic of a user and media data having a fixed play time, and thereby may evenly distribute load of the media server, efficiently reduce a service expense, and reduce a queue time of the user.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 is a diagram illustrating an example of a Server Load Balancing (SLB) system of a media service according to an embodiment of the present invention;
FIG. 2 is a graph illustrating an example of statistical information about a media service change pattern or habit of a user according to an embodiment of the present invention;
FIG. 3 is a block diagram illustrating an example of a configuration of a control server according to an embodiment of the present invention;
FIG. 4 is a diagram illustrating an example of an operation of calculating an expectation with respect to a remaining queue time according to an embodiment of the present invention; and
FIG. 5 is a flowchart illustrating an SLB method of a media service according to an embodiment of the present invention.

DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

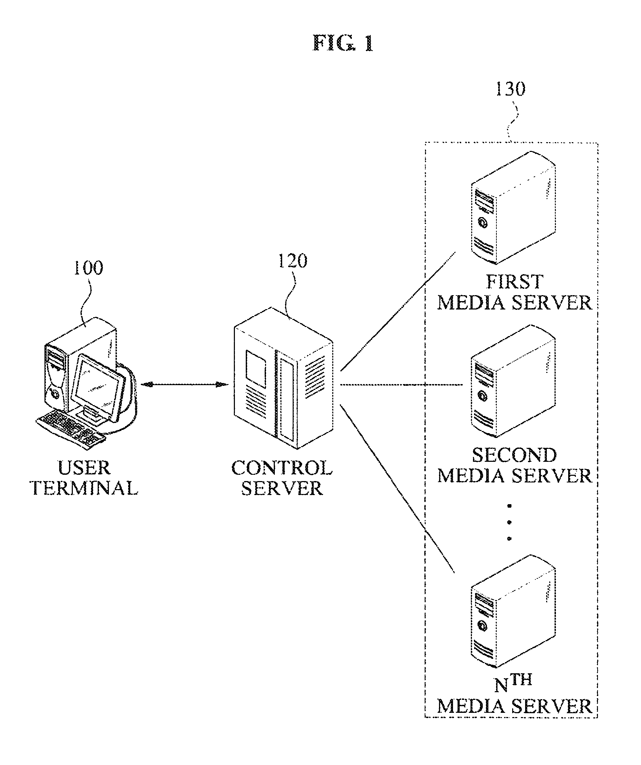

FIG. 1 is a diagram illustrating an example of a Server Load Balancing (SLB) system of a media service according to an embodiment of the present invention.

The SLB system may include a control server 120 and a plurality of media servers 130, as illustrated in FIG. 1.

The control server 120 may receive a media service request signal from a user terminal 100. Also, the control server 120 may select any one of the plurality of media servers 130 according to the media service request signal, and connect the selected media server with the user terminal 100.

In this instance, the control server 120 may calculate a media service termination probability of a user depending on a media play time, based on statistical information about a media service change pattern or habit of the user. Also, the control server 120 may select a media server to be connected to the user terminal 100 from the plurality of media servers 130 based on the calculated media service termination probability. In this instance, the statistical information about a media service change pattern or habit of the user may include information about an amount of media services, that are terminated while media data is replayed, and about a time when each of the media services is terminated in the middle of service, depending on a media service use pattern or habit of the user.

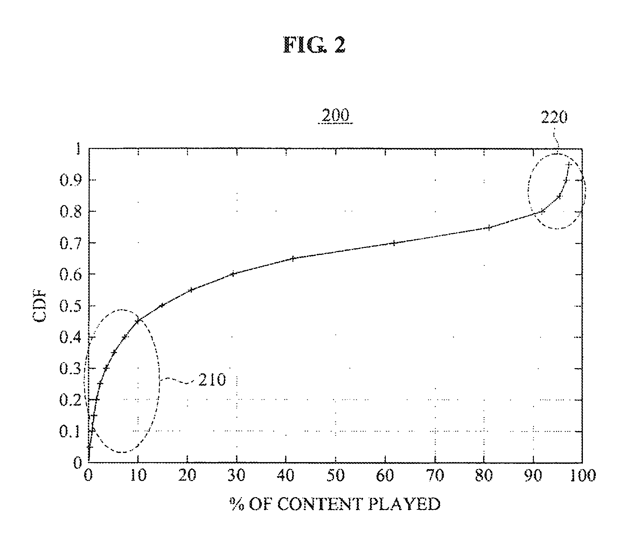

An operation of calculating the media service termination probability is described in greater detail with reference to FIG. 2.

The plurality of media servers 130 may replay stored media data, and provide media services to the user terminal 100 connected by the control server 120.

In this instance, the media data, previously stored in the plurality of media servers 130, may be contents having a fixed play time for each media data, such as a Video on Demand (VOD).

FIG. 2 is a graph 200 illustrating an example of statistical information about a media service change pattern or habit of a user according to an embodiment of the present invention.

The control server 120 may calculate a media service termination probability of a user depending on a media play time by referring to the graph 200 of FIG. 2.

Since a media service according to an embodiment of the present invention indicates contents having a fixed play time for each media data, when a user does not terminate the media service in the middle of service, a time for providing the media service may be fixed. Also, a plurality of users may determine whether to continue to view the media data after seeing a beginning part of the media data, and thus the user may terminate the media service based on the determination. Accordingly, the graph 200 may indicate an amount of media services that are terminated while media data is replayed, and a time when each of the media services is terminated in the middle of service, according to a ratio with a total play time of each of the media services, depending on a media service use pattern or habit of the user.

In this instance, the media service termination probability of the user in the graph 200 may be represented as a cumulative density function (CDF).

For example, by referring to the graph 200 of FIG. 2, media services, that are terminated in a period 210 where 10 % of content of media data is replayed, may be 45 % of all media services. Also, a number of media services terminated may moderately increase after the period 210, and only 20 % of the entire media services may be replayed in a period 220 where over 90 % of content is replayed.

Referring to the graph 200 of FIG. 2, it may be ascertained that a number of users may determine whether to continue to view the media data in the period 210, and a probability of terminating a media service in the middle of service may decrease as a played time of the media data increases.

Also, an ending credit may be generally replayed in the period 220. Accordingly, it may be predicted that the users realize that the ending credit is being replayed and terminate media services.

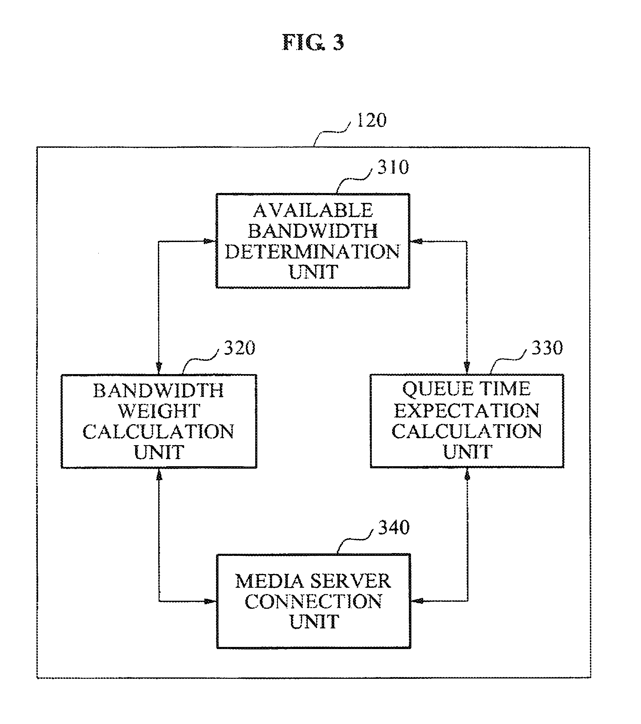

FIG. 3 is a block diagram illustrating an example of a configuration of a control server 120 according to an embodiment of the present invention.

Referring to FIG. 3, the control server 120 may include an available bandwidth determination unit 310, a bandwidth weight calculation unit 320, a queue time expectation calculation unit 330, and a media server connection unit 340.

When the media service request signal is received, the available bandwidth determination unit 310 may determine whether an available bandwidth exists in each of the plurality of media servers 130. The available bandwidth may be a remaining bandwidth that may be used by each of the plurality of media servers 130.

In this instance, the available bandwidth determination unit 310 may operate the bandwidth weight calculation unit 320, when the available bandwidth exists. Also, when the available bandwidth does not exist, the available bandwidth determination unit 310 may operate the queue time expectation calculation unit 330.

When it is determined that the available bandwidth exists in each of the plurality of media servers 130 by the available bandwidth determination unit 310, the bandwidth weight calculation unit 320 may calculate a bandwidth weight where a weight is provided to a bandwidth of each of the plurality of media servers 130, and select a media server with a greatest bandwidth weight.

Specifically, the bandwidth weight calculation unit 320 may calculate a potential bandwidth, potentially possessed by of each of the plurality of media servers 130, based on a media service termination probability of a user. Also, the bandwidth weight calculation unit 320 may calculate the bandwidth weight of each of the plurality of media servers 130 using the potential bandwidth, and select the media server with the greatest potential bandwidth.

In this instance, the bandwidth weight calculation unit 320 may calculate a weighting coefficient by subtracting a ratio of the available bandwidth and a total bandwidth from one. Also, the bandwidth weight calculation unit 320 may calculate the bandwidth weight by applying the weighting coefficient to the potential bandwidth and the available bandwidth. In this instance, the weighting coefficient may be given by,

[Equation 1]

$$\text{weighting coefficient} = 1 - (\text{available bandwidth}/\text{total bandwidth})$$

Here, the total bandwidth may be obtained by summing bandwidths of the plurality of media servers 130.

As the available bandwidth decreases, there is an effect that the available bandwidth may increase an effect on the bandwidth weight in comparison to the potential bandwidth that occurs due to termination of a media service.

Also, the bandwidth weight calculation unit 320 may calculate the bandwidth weight by summing a value, obtained by multiplying the weighting coefficient with the available bandwidth, and a value obtained by multiplying the potential bandwidth with the ratio of the available bandwidth and the total bandwidth, according to Equation 2 given as below.

[Equation 2]

$$\text{bandwidth weight} = (\text{weighting coefficient} * \text{available bandwidth}) + \{(1 - \text{weighting}$$

$$\text{coefficient}) * \text{potential bandwidth}\}$$

Also, the bandwidth weight calculation unit 320 may apply the media service termination probability to each bandwidth, which is used by each of the plurality of media servers 130 to provide media services, and thereby may calculate the potential bandwidth by summing each of the bandwidths where the media service termination probability is applied. In this instance, the potential bandwidth may be given by,

[Equation 3]

$$\text{potential bandwidth} = \sum_{i=1}^{n} \left\{ f\left(\frac{t_i}{T_i} * 100\right) * BW_i \right\}$$

where n may denote a number of media services provided by the media servers 130, and a function f() may be a Probability Density Function (PDF) to calculate the media service termination probability.

Also, $t_i$ and $T_i$ may denote a current play time of an $i^{th}$ media service and a total play time of the $i^{th}$ media service, respectively. Also, $BW_i$ may denote a required bandwidth of the $i^{th}$ media service.

The bandwidth weight calculation unit 320 may calculate the media service termination probability, $f\left(\frac{t_i}{T_i} \times 100\right)$, using the function f(). Also, the bandwidth weight calculation unit 320 may calculate the potential bandwidth, which is a bandwidth that may increase when a media service is terminated, by applying a required bandwidth of the media service to the media service termination probability.

The bandwidth weight calculation unit 320 may select the media server with a greatest bandwidth weight, and thereby may select a media server with a great potential bandwidth and great available bandwidth from the media servers 130. Accordingly, the load of media servers may be evenly distributed. Here, the media server with a great potential bandwidth and great available bandwidth may indicate a media server where a bandwidth may be increased.

When the available bandwidth determination unit 310 determines that the available bandwidth does not exist in each of the media servers 130, the queue time expectation calculation unit 330 may select a media server to register a media services request from the user until a bandwidth, required to provide the media service, is available. That is, the queue time expectation calculation unit 330 may calculate an expectation with respect to a queue time remaining until the plurality of media servers 130 provides the user with media services, and select a media server with a smallest expectation with respect to the queue time.

Specifically, the queue time expectation calculation unit 330 may calculate an expectation with respect to a play time, a time remaining until an end of the media services provided by the plurality of media servers 130, based on the media service termination probability. Also, the queue time expectation calculation unit 330 may calculate the expectation with respect to the queue time remaining until the plurality of media servers 130 provides the user with the media services, using the calculated expectation with respect to the remaining play time, and thereby may select the media server with the shortest expectation with respect to the queue time.

In this instance, the queue time expectation calculation unit 330 may convert the an average play time of the media services by applying a total play time of the media services provided by the plurality of media servers 130 to the media service termination probability. Also, the queue time expectation calculation unit 330 may calculate the expectation with respect to the remaining play time by applying the average play time to a time that the media services are replayed. In this instance, the average play time may satisfy Equation 4 given as below, and the expectation with respect to the remaining play time may satisfy Equation 5 given as below.

[Equation 4]

$$\int_{\frac{t_i}{T_i}*100}^{100} xf\left(x \mid x > \frac{t_i}{T_i} * 100\right) dx$$

[Equation 5]

$$\text{expectation with respect to remaining play time} = \text{average play time of media service} *$$

$$\frac{T_i}{100} - t_i$$

In this instance, Equation 4 may be obtained by integrating the function f() and normalizing to 100. That is, the average play time may indicate an average play time of media data having a total play time of '100'.

Accordingly, an actual average play time may be obtained by multiplying the average play time with $T_i/100$, according to Equation 5, and $t_i$ may be subtracted from the actual average play time to calculate the expectation with respect to the remaining play time. In this instance, the queue time expectation calculation unit 330 may set $t_i$ as '0' with respect to a media service which is not replayed yet and is in queue. Also, the queue time expectation calculation unit 330 may set $t_i$ as an actual play time with respect to a media service which is being provided by a media server.

Also, the queue time expectation calculation unit 330 may group media data based on a played time and a total play time without calculating the expectation with respect to the remaining play time every time a media service request is received from the user. When the media service request is received from the user, the queue time expectation calculation unit 330 may calculate the expectation with respect to the remaining play time by applying a table of expectation with respect to a remaining time to each group including the media data.

Specifically, the queue time expectation calculation unit 330 may calculate an average remaining play time by applying the media service termination probability to a play time of each of the plurality of media services 130. Also, the queue time expectation calculation unit 330 may form a group table where the play time of each of the media services 130 is mapped to the average remaining play time, depending on a play time. The queue time expectation calculation unit 330 may group the media services 130 based on a length of a total play time of each of the media services 130, and form a total play time table where an average play time is set for each group.

Table 1 given as below may be an example of a group table depending on a play time, and Table 2 may be an example of a total play time table.

[Table 1]

| Group | Play time (%) | average remaining play time (%) | Group | Play time (%) | average remaining play time (%) |
|---|---|---|---|---|---|
| P1 | 0 ~ 0.5 | 38.66004963 | P20 | 50.5 ~ 55.5 | 35.1454296 |
| P2 | 0.5 ~1.5 | 37.66004963 | P21 | 55.5 ~ 60.5 | 31.3637393 |
| P3 | 1.5 ~ 2.5 | 42.11647727 | P22 | 60.5 ~ 65.5 | 27.48417704 |
| P4 | 2.5 ~ 3.5 | 44.89783282 | P23 | 65.5 ~ 70.5 | 23.49508587 |
| P5 | 3.5 ~ 4.5 | 46.70394737 | P24 | 70.5 ~ 75.5 | 19.38288081 |
| P6 | 4.5 ~ 5.5 | 48.12802768 | P25 | 75.5 ~ 80.5 | 15.29873529 |
| P7 | 5.5 ~ 6.5 | 49.21299639 | P26 | 80.5 ~ 85.5 | 11.53253537 |
| P8 | 6.5 ~ 7.5 | 50.05617978 | P27 | 85.5 ~ 90.5 | 7.53342818 |
| P9 | 7.5 ~ 8.5 | 50.80232558 | P28 | 90.5 ~ 91.5 | 4.988764045 |
| P10 | 8.5 ~ 9.5 | 51.21912351 | P29 | 91.5 ~ 92.5 | 4.162790698 |
| P11 | 9.5 ~ 10.5 | 51.68852459 | P30 | 92.5 ~ 93.5 | 3.419753086 |
| P12 | 10.5 ~ 15.5 | 51.79685858 | P31 | 93.5 ~ 94.5 | 2.693333333 |
| P13 | 15.5 ~ 20.5 | 51.03007349 | P32 | 94.5 ~ 95.5 | 1.927536232 |
| P14 | 20.5 ~ 25.5 | 49.76443252 | P33 | 95.5-96.5 | 1.216666667 |
| P15 | 25.5 ~ 30.5 | 48.70256537 | P34 | 96.5 ~ 97.5 | 0.697674419 |
| P16 | 30.5 ~ 35.5 | 47.30333095 | P35 | 97.5 ~ 98.5 | 0.363636364 |
| P17 | 35.5 ~ 40.5 | 45.15281171 | P36 | 98,5 ~ 99.5 | 0.142857143 |
| P18 | 40.5 ~ 45.5 | 42.45409869 | P37 | 99.5 ~ 100 | 0 |
| P19 | 45.5 ~ 50.5 | 38.83930729 | | | |

[Table 2]

| Group | Total play time (minutes) | Average value (minutes) |
|---|---|---|
| T1 | 0 ~ 20 | 10 |
| T2 | 20 ~ 40 | 30 |
| T3 | 40 ~ 60 | 50 |
| T4 | 60 ~ 80 | 70 |
| T5 | 80 ~ 100 | 90 |
| T6 | 100 ~ 120 | 110 |

Also, the queue time expectation calculation unit 330 may extract the average remaining play time, mapped to a time when each of the media services 130 is replayed, from the group table depending on the play time. The queue time expectation calculation unit 330 may extract the average play time, mapped to the total play time of the media services 130, from the total play time table. Also, the queue time expectation calculation unit 330 may calculate the expectation with respect to the remaining play time based on the average remaining play time and the average play time mapped to the total play time.

For example, as shown in Table 3, the queue time expectation calculation unit 330 may select a group including the total play time from Table 2 for each media service, select a time when a media service is replayed from Table 3, and multiply the group and the time. Accordingly, the queue time expectation calculation unit 330 may calculate the expectation with respect to the remaining play time.

[Table 3]

| Play time | average remaining play time (minutes) | | Play time | average remaining play time (minutes) |
|---|---|---|---|---|
| T1*P37 | 0 | | T5*P36 | 0.128571429 |
| T2*P37 | 0 | | T6*P36 | 0.157142857 |
| T3*P37 | 0 | | T3*P35 | 0.18182 |
| T4*P37 | 0 | | T1*P32 | 0.19275 |
| T5*P37 | 0 | | T2*P34 | 0.20930 |
| T6*P37 | 0 | | T4*P35 | 0.254545455 |
| T1*P36 | 0.01429 | | omitted ... | omitted ... |
| T1*P35 | 0.03636 | | omitted ... | omitted ... |
| T2*P36 | 0.04286 | | T6*P8 | 55.06179775 |
| T1*P34 | 0.06977 | | T6*P9 | 55.88255814 |
| T3*P36 | 0.07143 | | T6*P13 | 56.13308084 |
| T4*P36 | 0.1 | | T6*P10 | 56.34103586 |
| T2*P35 | 0.10909 | | T6*P11 | 56.85737705 |
| T1*P33 | 0.12167 | | T6*P12 | 56.97654444 |

Also, the queue time expectation calculation unit 330 may sequentially calculate the expectation with respect to the queue time of a media service, included in a queue of each of the media servers, according to an order of the queue, based on the expectation with respect to the remaining play time of the media service provided by the media server in real time.

Specifically, the queue time expectation calculation unit 330 may calculate a minimum value of the expectation with respect to the remaining play time of each of the media services, as a queue time expectation of a media service with a highest priority in the queue. Here, the queue time expectation may indicate an expectation with respect to a remaining queue time. Also, the queue time expectation calculation unit 330 may calculate a higher queue time expectation by summing the queue time expectation and an expectation with respect to a remaining play time of at least one media service with a higher priority in the queue. The queue time expectation calculation unit 330 may calculate a smallest expectation from among the higher queue time expectation and the expectation with respect to the remaining play time, as a queue time expectation of another media service included in the queue. Also, the queue time expectation calculation unit 330 may select a media server which has a smallest sum of expectations with respect to remaining queue times of all media services included in the queue.

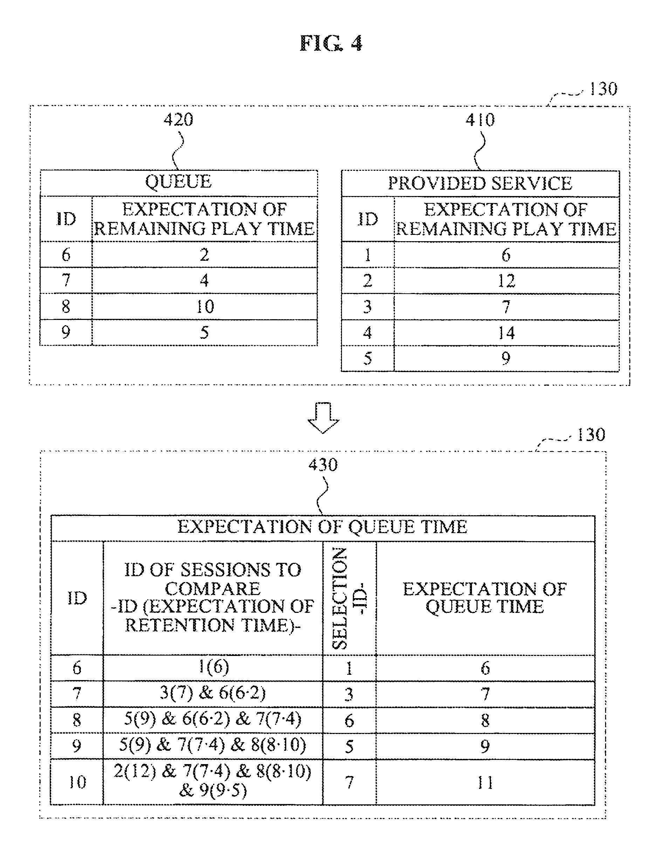

An operation of calculating the expectation with respect to remaining queue time is described in detail with reference to FIG. 4.

The media server connection unit 340 may connect the media server, selected by the bandwidth weight calculation unit 320, with the user terminal 100, or may register a media service request signal in the queue of the media server selected by the queue time expectation calculation unit 330. The media service request signal may be received from the user terminal 1 00.

FIG. 4 is a diagram illustrating an example of an operation of calculating an expectation with respect to a remaining queue time according to an embodiment of the present invention.

As illustrated in FIG. 4, the media servers 130 may include a list 410 of media data replayed to provide media services, and a list 420 of queue where media data selected based on a media service request, signal is registered.

In this instance, the queue time expectation calculation unit 330 may calculate an expectation 430 with respect to a remaining queue time, hereinafter, referred to as a queue time expectation 430, of media data, included in the list 420, using an expectation of a remaining play time of each of the media data included in the list 410 and the list 420. Referring to FIG. 4, an identifier (ID) may be defined as an identifier to identify a media service.

The queue time expectation calculation unit 330 may calculate the expectation of the remaining play time of each of the media data included in the list 410 and the list 420 using Equation 4, or Table 1 and Table 2.

The queue time expectation calculation unit 330 may calculate, as the queue time expectation 430 of a service '6' located at the top of the list 420, an expectation '6' of a remaining play time of a service '1'. The expectation '6' is a minimum value from among expectations of remaining play times of media data included in the list 410.

The queue time expectation calculation unit 330 may calculate a higher queue time expectation '8' by summing the queue time expectation '6' and an expectation '2' with respect to a remaining play time of the service '6'. The higher queue time expectation '8' may be a time until another media data may be replayed after replaying the service '1' and the service '6'.

The queue time expectation calculation unit 330 may calculate an expectation '7' with respect to a remaining play time of a service '3', as a queue time expectation of a service '7'. That is, the expectation '7' may be a smallest expectation from among a higher queue time expectation '8' of the service '6' and the expectation '7' with respect to the remaining play time of the service '3'. Here, the service '6' may have a higher priority than the service '7', and the expectation '7' may be a second smallest value of the expectations of the remaining play time.

The queue time expectation calculation unit 330 may calculate a higher queue time expectation '11' of the service seven by summing the queue time expectation '7'oaf the service '7' and an expectation '4' with respect to a remaining play time of the service '7'.

The queue time expectation calculation unit 330 may calculate a higher queue time expectation '8' of the service '6', as a queue time expectation of a service '8'. That is, the expectation '8' may be a smallest expectation from among an expectation '9' with respect to the remaining play time of a service '5', she higher queue time expectation '8' of the service '6', and the higher queue time expectation '11' of the service '7'. Here, the service '6' and the service '7' may have a higher priority than the service '8', and the expectation '9' may be a third smallest value of the expectations of the remaining play time.

The queue time expectation calculation unit 330 may calculate a higher queue time expectation '18' of the service '8' by summing the queue time expectation '8' of the service '8' and an expectation '10' with respect to a remaining play time of the service '8'.

The queue time expectation calculation unit 330 may calculate the expectation '9' with respect to the remaining play time of the service '5', as a queue time expectation of a service '9'. That is, the expectation '9' may be a smallest expectation from among the expectation '9' with respect to the remaining play time of the service '5', the higher queue time expectation '18' of the service '8', and the higher queue time expectation '11' of the service '7'. Here, the service '7' may have a higher priority than the service '8', and the expectation '9' may be a queue time expectation which is not selected above. In this instance, the queue time expectation calculation unit 330 may not compare other higher queue time expectations since the expectation '8' of the service '6' has been selected as the queue time expectation of the service '6',

When new media data is added to the queue, the queue time expectation calculation unit 330 may calculate a queue time expectation of the added media data by repeating the above-described operations.

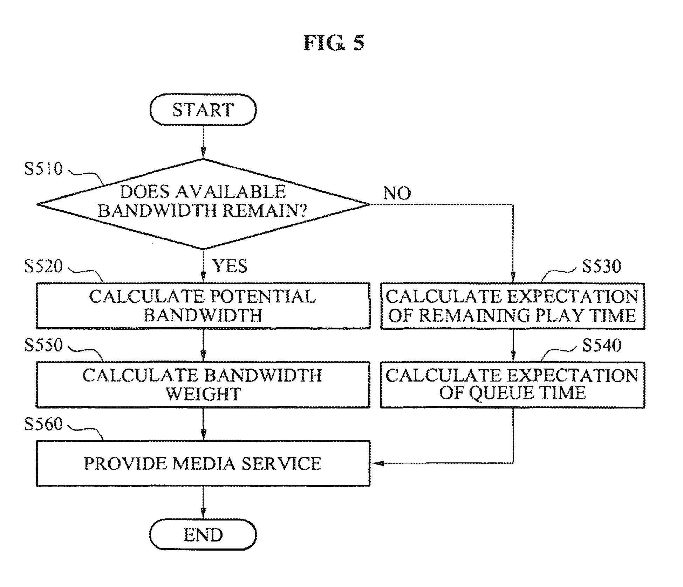

FIG. 5 is a flowchart illustrating an SLB method of a media service according to an embodiment of the present invention.

In operation S510, the available bandwidth determination unit 310 may determine whether an available bandwidth, which is a remaining bandwidth, exists in each of the plurality of media servers 130. In this instance, the available bandwidth determination unit 310 may operate the bandwidth weight calculation unit 320, when the available bandwidth exists. Also, when the available bandwidth does not exist, the available bandwidth determination unit 310 may operate the queue time expectation calculation unit 330.

In operation S520, the bandwidth weight calculation unit 320 may calculate a potential bandwidth of each of the media servers 130.

Specifically, the bandwidth weight calculation unit 320 may apply the media service termination probability to each bandwidth, which is used by each of the plurality of media servers 130 to provide media services, and thereby may calculate the potential bandwidth by summing each of the bandwidths where the media service termination probability is applied.

In operation S530, the bandwidth weight calculation unit 320 may calculate a bandwidth weight based on the available bandwidth and the potential bandwidth, calculated in operation S520, and may select a media server with a greatest bandwidth weight.

Specifically, the bandwidth weight calculation unit 320 may calculate a weighting coefficient according to Equation 1, and calculate the bandwidth weight by applying Equation 2 to the weighting coefficient, the potential bandwidth, and the available bandwidth.

In operation S540, the queue time expectation calculation unit 330 may calculate an expectation with respect to a remaining play time of a media service provided by each of the media servers 130, and an expectation with respect to a remaining play time of media data included in a queue of the media server.

Specifically, the queue time expectation calculation unit 330 may calculate the expectations using Equation 4, or Table 1 and Table 2.

In operation S550, the queue time expectation calculation unit 330 may calculate an expectation with respect to a remaining queue time of media data, included in the queue, using the expectations calculated in operation S540, and select a media server which has a smallest sum of expectations with respect to remaining queue times of all media services included in the queue.

Specifically, in operation S550, a queue time expectation of a media service with a highest priority in the queue of the media servers 130 may be calculated using the expectation with respect to the remaining play time. Also, in operation S5S0, a higher queue time expectation may be calculated using the queue time expectation and an expectation with respect to a remaining play time of at least one media service with a higher priority in the queue. Also, in operation S550, a queue time expectation of another media service, included in the queue, may be calculated using the higher queue time expectation and the expectation with respect to the remaining play time of the media service provided by each of the media servers.

In operation S560, the media server connection unit 340 may connect the media server, selected by the bandwidth weight calculation unit 320 in operation S540, with the user terminal 100 to provide the user terminal 100 with the media service, or may register the media service request signal in a queue of the media server, selected by the queue time expectation calculation unit 330 in operation S550, to enable the media servers 130 to provide the media service to the user terminal 100, when the available bandwidths of the media servers 130 remain.

According to an embodiment of the present invention, the SLB system may predict a queue time or an available bandwidth of a media server based on an operation characteristic of a user depending on media data having a fixed play time, and thereby may evenly distribute load of the media server and reduce a queue time of the user.

**Claims**

1. A Server Load Balancing, SLB system of a media service, the SLB system comprising:

    a plurality of media servers (130) to replay media data, and to provide the media service;
    a control server (120) to calculate a media service termination probability of a user depending on a media play time based on statistical information about a media service change pattern or habit of the user, to receive a media service request signal from a terminal (100) of the user, to select a media server from the plurality of media servers (130) based on the media service termination probability, and to connect the selected media server with the terminal (100) of the user according to the media service request signal
    **characterized in that** the control server (120) comprises:

    an available bandwidth determination unit (310) to determine whether an available bandwidth, which is a remaining bandwidth, exists in each of the plurality of media servers (130), when the media service request signal is received;
    a bandwidth weight calculation unit (320) to, when the available bandwidth exists in each of the media servers (130), calculate a bandwidth weight based on the media service termination probability, and to select a media server with a greatest bandwidth weight, the bandwidth weight being obtained by providing a weight to a bandwidth of each of the plurality of media servers (130);
    a queue time expectation calculation unit (330) to, when the available bandwidth does not exist in each of the media servers (130), calculate an expectation with respect to a queue time remaining until the plurality of media servers (130) provides the user with media services, based on the media service termination probability, and to select a media server with a smallest expectation with respect to the queue time; and
    a media server connection unit (340) to connect the media server, selected by the bandwidth weight calculation unit (320), with the terminal (100) of the user, or to register the media service request signal in a queue of the media server selected by the queue time expectation calculation unit (330).

2. The SLB system of claim 1, wherein the bandwidth weight calculation unit (320) calculates a potential bandwidth based on the media service termination probability, the potential bandwidth indicating a bandwidth potentially possessed by the plurality of media servers (130),
    calculates the bandwidth weight of each of the plurality of media servers (130) using the potential bandwidth, and selects the media server with the greatest potential bandwidth.

3. The SLB system of claims 1 or 2, wherein the bandwidth weight calculation unit (320) calculates a weighting coefficient by subtracting a ratio of the available bandwidth and a total bandwidth from one, the total bandwidth being obtained by summing the bandwidth of each of the plurality of media servers (130), and
    calculates the bandwidth weight by applying the weighting coefficient to the potential bandwidth and the available bandwidth.

**4.** The SLB system of one of claims 1 to 3, wherein the bandwidth weight is obtained by summing a value, obtained by multiplying the weighting coefficient with the available bandwidth, and a value obtained by multiplying the potential bandwidth with the ratio of the available bandwidth and the total bandwidth.

**5.** The SLB system of one of claims 2 to 4, wherein the bandwidth weight calculation unit (320) applies the media service termination probability to each bandwidth which is used by each of the plurality of media servers (130) to provide the media services, and
calculates the potential bandwidth by summing each of the bandwidths where the media service termination probability is applied.

**6.** The SLB system of one of claims 1 to 5, wherein the queue time expectation calculation unit (330) calculates an expectation with respect to a play time remaining until media services provided by the plurality of media servers (130) end, based on the media service termination probability,
calculates the expectation with respect to the queue time remaining until the plurality of media servers (130) provides the user with the media services, using the expectation with respect to the remaining play time, and
selects the media server with the smallest expectation with respect to the queue time.

**7.** The SLB system of one of claims 1 to 6, wherein the queue time expectation calculation unit (330) converts the media service termination probability into a termination probability depending on a play time of each of the media services by applying a total play time of the media services provided by the plurality of media servers (130) to the media service termination probability, and
calculates the expectation with respect to the remaining play time by applying the termination probability to a time when the media service is replayed.

**8.** The SLB system of one of claims 1 to 7, wherein the queue time expectation calculation unit (330) calculates an average remaining play time by applying the media service termination probability to a play time of each of the plurality of media services,
forms a group table where the play time of each of the media services is mapped to the average remaining play time, depending on a played time,
groups the media services based on a length of a total play time of each of the media services, and
forms a total play time table where an average play time is set for each group.

**9.** The SLB system of one of claims 1 to 8, wherein the queue time expectation calculation unit (330) extracts the average remaining play time, mapped to a time when each of the media services is replayed, from the group table depending on the played time,
extracts the average play time, mapped to the total play time of the media services, from the total play time table, and
calculates the expectation with respect to the remaining play time based on the average remaining play time and the average play time mapped to the total play time.

**10.** The SLB system of one of claims 1 to 9, wherein the queue time expectation calculation unit (330) sequentially calculates the expectation with respect to the queue time of a media service, included in the queue of each of the media servers (130), according to an order of the queue, based on the expectation with respect to the remaining play time of the media service provided by each of the media servers (130) in real time.

**11.** The SLB system of one of claims 1 to 10, wherein the queue time expectation calculation unit (330) calculates a minimum value of the expectation with respect to the remaining play time of each of the media services, as a queue time expectation of a media service with a highest priority in the queue, the queue time expectation indicating an expectation with respect to a remaining queue time,
calculates a higher queue time expectation by summing the queue time expectation and an expectation with respect to a remaining play time of at least one media service with a higher priority in the queue,
calculates a smallest expectation from among the higher queue time expectation and the expectation with respect to the remaining play time, as a queue time expectation of another media service included in the queue, and
selects a media server which has a smallest sum of expectations with respect to remaining queue times of all media services included in the queue.

**12.** An SLB method of a media service, the SLB method comprising:

calculating a media service termination probability of a user depending on a media play time based on statistical information about a media service change pattern or habit of the user;
**characterized in that**, the SLB method comprises:

determining whether an available bandwidth, which is a remaining bandwidth, exists in each of a plurality of media servers (S510);
calculating, when the available bandwidth exists in each of the media servers, a bandwidth weight (S550) based on the media service termination probability, and selecting a media server with a greatest bandwidth weight, the bandwidth weight being obtained by providing a weight to a bandwidth of each of the plurality of media servers;
calculating, when the available bandwidth does not exist in each of the media servers, an expectation with respect to a queue time (S540) remaining until the plurality of media servers provides the user with the media services based on the media service termination probability, and selecting a media server with a smallest expectation with respect to the queue time; and
connecting the media server, selected by a bandwidth weight calculation unit, with the terminal of the user, or registering a media service request signal in a queue of the media server selected by a queue time expectation calculation unit.

13. The SLB method of claim 12, wherein the selecting of the media server with the greatest bandwidth weight comprises:

applying the media service termination probability to each bandwidth which is used by each of the plurality of media servers to provide the media service;
calculating a potential bandwidth of the media server (S520) by summing each of the bandwidths where the media service termination probability is applied;
calculating a bandwidth weight (S550) of each of the plurality of media servers using the potential bandwidth; and
selecting a media server with a greatest potential bandwidth.

14. The SLB method of claim 12 or 13, wherein the selecting of the media server with the smallest expectation comprises:

calculating an expectation with respect to a play time (S530) remaining until media services provided by the plurality of media servers end, based on the media service termination probability;
calculating a queue time expectation of a media service (S540) with a highest priority in a queue of the plurality of media servers, using the expectation with respect to the remaining play time;
calculating a higher queue time expectation using the queue time expectation and an expectation with respect to a remaining play time of at least one media service with a higher priority in the queue;
calculating a queue time expectation of another media service, included in the queue, using the higher queue time expectation and the expectation with respect to the remaining play time of the media service provided by each of the media servers; and
selecting a media server which has a smallest sum of expectations with respect to remaining queue times of all media services included in the queue.

**Patentansprüche**

1. Serverlastausgleich, SLB, -System eines Mediendienstes, wobei das SLB-System umfasst:

eine Mehrzahl von Medienservern (130), um Mediendaten wiederzugeben und um den Mediendienst bereitzustellen;
einen Steuerserver (120), um eine Mediendienst-Beendigungswahrscheinlichkeit eines Nutzers in Abhängigkeit von einer MedienWiedergabezeit basierend auf statistischer Information über ein Mediendienst-Änderungsmuster oder -gewohnheit des Nutzers zu berechnen, ein Mediendienst-Anfragesignal von einem Endgerät (100) des Nutzers zu empfangen, einen Medienserver aus der Mehrzahl von Medienservern (130) basierend auf der Mediendienst-Beendigungswahrscheinlichkeit auszuwählen und den ausgewählten Medienserver mit dem Endgerät (100) des Nutzers gemäß dem Mediendienst-Anfragesignal zu verbinden, **dadurch gekennzeichnet, dass** der Steuerserver (120) umfasst:

eine Bestimmungseinheit für eine verfügbare Bandbreite (310), um zu bestimmen, ob eine verfügbare Bandbreite, welches eine verbleibende Bandbreite ist, in jedem der Mehrzahl von Medienservern (130) existiert, wenn das Mediendienst-Anfragesignal empfangen wird;

eine Berechnungseinheit für ein Bandbreitengewicht (320), um ein Bandbreitengewicht basierend auf der Mediendienst-Beendigungswahrscheinlichkeit zu berechnen, wenn die verfügbare Bandbreite in jedem der Medienserver (130) existiert, und einen Medienserver mit einem größten Bandbreitengewicht auszuwählen, wobei das Bandbreitengewicht durch Bereitstellen eines Gewichts zu einer Bandbreite von jedem der Mehrzahl von Medienservern (130) erhalten wird;

eine Berechnungseinheit für einen Warteschlangenzeit-Erwartungswert (330), um einen Erwartungswert in Bezug auf eine Warteschlangenzeit, welche verbleibt, bis die Mehrzahl von Medienservern (130) dem Nutzer Mediendienste bereitstellt, basierend auf der Mediendienst-Beendigungswahrscheinlichkeit zu berechnen, wenn die verfügbare Bandbreite nicht in jedem der Medienserver (130) existiert, und einen Medienserver mit dem geringsten Erwartungswert in Bezug auf die Warteschlangenzeit auszuwählen; und

eine Verbindungseinheit für Medienserver (140), um den Medienserver, welcher durch die Berechnungseinheit für ein Bandbreitengewicht (320) ausgewählt ist, mit dem Endgerät (100) des Nutzers zu verbinden oder das Mediendienst-Anfragesignal in einer Warteschlange des Medienservers zu registrieren, welcher durch die Berechnungseinheit für einen Warteschlangenzeit-Erwartungswert (330) ausgewählt wird.

2. SLB-System nach Anspruch 1, wobei die Berechnungseinheit für ein Bandbreitengewicht (320) eine potentielle Bandbreite basierend auf der Mediendienst-Beendigungswahrscheinlichkeit berechnet, wobei die potentielle Bandbreite eine Bandbreite angibt, über welche die Mehrzahl von Medienservern (130) potentiell verfügen,

das Bandbreitengewicht von jedem der Mehrzahl von Medienservern (130) mittels der potentiellen Bandbreite berechnet und

den Medienserver mit der größten potentiellen Bandbreite auswählt.

3. SLB-System nach Anspruch 1 oder 2, wobei die Berechnungseinheit für ein Bandbreitengewicht (320) einen Gewichtungskoeffizient durch Subtrahieren eines Verhältnisses der verfügbaren Bandbreite und einer Gesamtbandbreite von eins berechnet, wobei die Gesamtbandbreite durch Summieren der Bandbreite von jedem der Mehrzahl von Medienservern (130) erhalten wird und

die Bandbreitengewichtung durch Anwenden des Gewichtungskoeffizienten auf die potentielle Bandbreite und die verfügbare Bandbreite berechnet.

4. SLB-System nach einem der Ansprüche 1 bis 3, wobei die Bandbreitengewichtung durch Summieren eines Wertes, welcher durch Multiplizieren des Gewichtungskoeffizienten mit der verfügbaren Bandbreite erhalten wird, und eines Wertes erhalten ist, welcher durch Multiplizieren der potentiellen Bandbreite mit dem Verhältnis der verfügbaren Bandbreite und der Gesamtbandbreite erhalten ist.

5. SLB-System nach einem der Ansprüche 2 bis 4, wobei die Berechnungseinheit für ein Bandbreitengewicht (320) die Mediendienst-Beendigungswahrscheinlichkeit auf jede Bandbreite anwendet, welche durch jeden der Mehrzahl von Medienservern (130) verwendet wird, um die Mediendienste bereitzustellen, und

die potentielle Bandbreite durch Summieren von jeder der Bandbreiten berechnet, auf welche die Mediendienst-Beendigungswahrscheinlichkeit angewendet ist.

6. SLB-System nach einem der Ansprüche 1 bis 5, wobei die Berechnungseinheit für einen Warteschlangenzeit-Erwartungswert (330) einen Erwartungswert in Bezug auf eine Wiedergabezeit, welche verbleibt, bis durch die Mehrzahl von Medienservern (130) bereitgestellte Mediendienste enden, basierend auf der Mediendienst-Beendigungswahrscheinlichkeit berechnet,

den Erwartungswert in Bezug auf die Warteschlangenzeit, welche verbleibt, bis die Mehrzahl von Medienservern (130) dem Nutzer die Mediendienste bereitstellt, mittels dem Erwartungswert in Bezug auf die verbleibende Wiedergabezeit berechnet und

den Medienserver mit dem geringsten Erwartungswert in Bezug auf die Warteschlangenzeit auswählt.

7. SLB-System nach einem der Ansprüche 1 bis 6, wobei die Berechnungseinheit für einen Warteschlangenzeit-Erwartungswert (330) die Mediendienst-Beendigungswahrscheinlichkeit in eine Beendigungswahrscheinlichkeit in Abhängigkeit von einer Wiedergabezeit von jedem der Mediendienste durch Anwenden einer Gesamtwiedergabezeit der Mediendienste, welche durch die Mehrzahl von Medienservern (130) bereitgestellt werden, auf die Mediendienst-Beendigungswahrscheinlichkeit umwandelt und

den Erwartungswert in Bezug auf die verbleibende Wiedergabezeit durch Anwenden der Beendigungswahrscheinlichkeit auf eine Zeit berechnet, wenn der Mediendienst wiedergegeben wird.

8. SLB-System nach einem der Ansprüche 1 bis 7, wobei die Berechnungseinheit für einen Warteschlangenzeit-Erwartungswert (330) eine durchschnittlich verbleibende Wiedergabezeit durch Anwenden der Mediendienst-Beendigungswahrscheinlichkeit auf eine Wiedergabezeit von jedem der Mehrzahl von Mediendiensten berechnet, eine Gruppentabelle, in der die Wiedergabezeit von jedem der Mediendienste auf die durchschnittlich verbleibende Wiedergabezeit abgebildet ist, in Abhängigkeit von einer wiedergegebenen Zeit bildet, die Mediendienste basierend auf einer Länge einer Gesamtwiedergabezeit von jedem der Mediendienste gruppiert und eine Gesamtwiedergabezeit-Tabelle bildet, in der eine durchschnittliche Wiedergabezeit für jede Gruppe gesetzt ist.

9. SLB-System nach einem der Ansprüche 1 bis 8, wobei die Berechnungseinheit für einen Warteschlangenzeit-Erwartungswert (330) die durchschnittlich verbleibende Wiedergabezeit, welche auf eine Zeit abgebildet ist, wenn jeder der Mediendienste wiedergegeben wird, von der Gruppentabelle in Abhängigkeit von der wiedergegebenen Zeit extrahiert, die durchschnittliche Wiedergabezeit, welche auf die Gesamtwiedergabezeit der Mediendienste abgebildet ist, von der Gesamtwiedergabezeit-Tabelle extrahiert und den Erwartungswert in Bezug auf die verbleibende Wiedergabezeit basierend auf der durchschnittlich verbleibenden Wiedergabezeit und der durchschnittlichen Wiedergabezeit berechnet, welche auf die Gesamtwiedergabezeit abgebildet ist.

10. SLB-System nach einem der Ansprüche 1 bis 9, wobei die Berechnungseinheit für einen Warteschlangenzeit-Erwartungswert (330) den Ennrartungswert in Bezug auf die Warteschlangenzeit eines Mediendienstes, welcher in der Warteschlange von jedem der Medienserver (130) enthalten ist, gemäß einer Reihenfolge der Warteschlange, die auf dem Erwartungswert in Bezug auf die verbleibende Wiedergabezeit des Mediendienstes basiert, der durch jeden der Medienserver (130) bereitgestellt ist, in Echtzeit sequentiell berechnet.

11. SLB-System nach einem der Ansprüche 1 bis 10, wobei die Berechnungseinheit für einen Warteschlangenzeit-Erwartungswert (330) einen Minimalwert des Erwartungswertes in Bezug auf die verbleibende Wiedergabezeit von jedem der Mediendienste als einen Warteschlangenzeit-Erwartungswert eines Mediendienstes mit einer höchsten Priorität in der Warteschlange berechnet, wobei der Warteschlangenzeit-Erwartungswert ein Erwartungswert in Bezug auf eine verbleibende Warteschlangenzeit angibt, einen höheren Warteschlangenzeit-Erwartungswert durch Summieren des Warteschlangenzeit-Erwartungswertes und eines Erwartungswertes in Bezug auf eine verbleibende Wiedergabezeit von wenigstens einem Mediendienst mit einer höheren Priorität in der Warteschlange berechnet, einen geringsten Erwartungswert unter dem höheren Warteschlangenzeit-Erwartungswert und dem Erwartungswert in Bezug auf die verbleibende Wiedergabezeit als ein Warteschlangenzeit-Erwartungswert eines anderen Mediendienstes berechnet, welche in der Warteschlange enthalten ist, und einen Medienserver auswählt, welcher eine geringste Summe von Erwartungswerten in Bezug auf verbleibende Warteschlangenzeiten von allen Mediendiensten aufweist, welche in der Warteschlange enthalten sind.

12. SLB-Verfahren eines Mediendienstes, wobei das SLB-Verfahren umfasst:

Berechnen einer Mediendienst-Beendigungswahrscheinlichkeit eines Nutzers in Abhängigkeit von einer Medienwiedergabezeit basierend auf statistischer Information über ein Mediendienst-Änderungsmuster oder -gewohnheit des Nutzers;
**dadurch gekennzeichnet, dass** das SLB-Verfahren umfasst:

Bestimmen, ob eine verfügbare Bandbreite, welches eine verbleibende Bandbreite ist, in jedem einer Mehrzahl von Medienservern existiert (S51 0);
Berechnen, wenn die verfügbare Bandbreite in jedem der Medienserver existiert, einer Bandbreitengewichtung (S550) basierend auf der Mediendienst-Beendigungswahrscheinlichkeit und Auswählen eines Medienservers mit einer größten Bandbreitengewichtung, wobei die Bandbreitengewichtung durch Bereitstellen einer Gewichtung zu einer Bandbreite von jedem der Mehrzahl von Medienservern erhalten wird;
Berechnen, wenn die verfügbare Bandbreite nicht in jedem der Medienserver existiert, eines Erwartungswertes in Bezug auf eine Warteschlangenzeit (S540), welche verbleibt, bis die Mehrzahl von Medienservern dem Nutzer die Mediendienste bereitstellt, basierend auf der Mediendienst-Beendigungswahrscheinlichkeit und Auswählen eines Medienservers mit einem geringsten Erwartungswert in Bezug auf die Warteschlangenzeit; und
Verbinden des Medienservers, welcher durch eine Berechnungseinheit für ein Bandbreitegewicht ausgewählt wird, mit dem Endgerät des Nutzers oder Registrieren eines Mediendienst-Anfragesignals in einer Warteschlange des Medienservers, welcher durch eine Berechnungseinheit für einen Warteschlangenzeit-Erwartungswert ausgewählt wird.

**13.** SLB-Verfahren nach Anspruch 12, wobei das Auswählen des Medienservers mit der größten Bandbreitengewichtung umfasst:

Anwenden der Mediendienst-Beendigungswahrscheinlichkeit auf jede Bandbreite, welcher durch jeden der Mehrzahl von Medienservern verwendet wird, um den Mediendienst bereitzustellen;
Berechnen einer potentiellen Bandbreite des Medienservers (S520) durch Summieren von jeder der Bandbreiten, auf welche die Mediendienst-Beendigungswahrscheinlichkeit angewendet wurde;
Berechnen einer Bandbreitengewichtung (S550) von jedem der Mehrzahl von Medienservern mittels der potentiellen Bandbreite; und
Auswählen eines Medienservers mit einer größten potentiellen Bandbreite.

**14.** SLB-Verfahren nach Anspruch 12 oder 13, wobei das Auswählen des Medienservers mit dem geringsten Erwartungswert umfasst:

Berechnen eines Erwartungswertes in Bezug auf eine Wiedergabezeit (S530), welche verbleibt, bis Mediendienste enden, welche durch die Mehrzahl von Medienservern bereitgestellt werden, basierend auf der Mediendienst-Beendigungswahrscheinlichkeit;
Berechnen eines Warteschlangenzeit-Erwartungswertes eines Mediendienstes (S540) mit einer höchsten Wahrscheinlichkeit in einer Warteschlange der Mehrzahl von Medienservern mittels des Erwartungswertes in Bezug auf die verbleibende Wiedergabezeit;
Berechnen eines höheren Warteschlangenzeit-Erwartungswertes mittels des Warteschlangenzeit-Erwartungswertes und eines Erwartungswertes in Bezug auf eine verbleibende Wiedergabezeit von wenigstens einem Mediendienst mit einer höheren Priorität in der Warteschlange;
Berechnen eines Warteschlangenzeit-Erwartungswertes eines anderen Mediendienstes, welcher in der Warteschlange enthalten ist, mittels des höheren Warteschlangenzeit-Erwartungswertes und des Erwartungswertes in Bezug auf die verbleibende Wiedergabezeit des Mediendienstes, welcher durch jeden der Medienserver bereitgestellt wird; und
Auswählen eines Medienservers, welcher eine geringste Summe von Erwartungswerten in Bezug auf verbleibende Warteschlangenzeiten von allen Mediendiensten aufweist, die in der Warteschlange enthalten sind.

**Revendications**

**1.** Système d'équilibrage de charge du serveur, SLB, d'un service de média, le système SLB comprenant :

une pluralité de serveurs de média (130) destinés à relire des données de média, et à fournir le service de média ;
un serveur de commande (120) destiné à calculer une probabilité de terminaison de service média d'un utilisateur en fonction d'un temps de lecture de média basé sur l'information statistique à propos d'un modèle de changement de service de média ou d'une habitude de l'utilisateur, à recevoir un signal de demande de service de média en provenance d'un terminal (100) de l'utilisateur, à sélectionner un serveur de média parmi la pluralité de serveurs de média (130) en se basant sur la probabilité de terminaison de service de média, et à connecter le serveur de média sélectionné au terminal (100) de l'utilisateur selon le signal de demande de service de média, **caractérisé en ce que** le serveur de commande (120) comprend :

une unité de détermination de largeur de bande disponible (310) destinée à déterminer si une largeur de bande disponible, qui est une largeur de bande restante, existe dans chacun des serveurs de la pluralité de serveurs média (130), lorsque le signal de demande de service de média est reçu ;
une unité de calcul de poids de largeur de bande (320) destinée, lorsque la largeur de bande disponible existe dans chacun des serveurs de média (130), à calculer un poids de largeur de bande en se basant sur la probabilité de terminaison de service de média, et à sélectionner un serveur de média ayant le poids de largeur de bande le plus élevé, le poids de la largeur de bande étant obtenu en fournissant un poids à une largeur de bande de chaque serveur de la pluralité de serveurs de média (130) ;
une unité de calcul de prévision de temps de file d'attente (330) destinée à, lorsque la largeur de bande disponible n'existe pas dans chacun des serveurs de média (130), calculer une prévision par rapport à un temps de file d'attente restant jusqu'à ce que la pluralité de serveur de média (130) fournisse à l'utilisateur des services de média, en se basant sur la probabilité de terminaison de service de média, et à sélectionner un serveur de média ayant une prévision la plus petite par rapport au temps de file d'attente ; et une unité de connexion de serveur média (340) destinée à connecter le serveur de média, sélectionné par l'unité de calcul de poids de largeur de bande (320), au terminal (100) de l'utilisateur, ou à enregistrer le signal de demande de service de média dans une file d'attente du serveur de média sélectionné par l'unité de calcul de prévision de temps de file d'attente (330).

2.  Système SLB selon la revendication 1, dans lequel l'unité de calcul de poids de largeur de bande (320) calcule une largeur de bande potentielle en se basant sur la probabilité de terminaison de service de média, la largeur de bande potentielle indiquant une largeur de bande potentiellement possédée par la pluralité de serveurs de média (130), calcule le poids de largeur de bande de chaque serveur de la pluralité de serveurs de média (130) en utilisant la largeur de bande potentielle, et sélectionne le serveur de média ayant la largeur de bande potentielle la plus grande.

3.  Système SLB selon la revendication 1 ou 2, dans lequel l'unité de calcul de poids de largeur de bande (320) calcule un coefficient de pondération en soustrayant un rapport entre la largeur de bande disponible et une largeur de bande totale de un, la largeur de bande totale étant obtenue en sommant la largeur de bande de chaque serveur de la pluralité de serveurs de média (130), et calcule le poids de largeur de bande en appliquant le coefficient de pondération à la largeur de bande potentielle et à la largeur de bande disponible.

4.  Système SLB selon l'une quelconque des revendications 1 à 3, dans lequel le poids de largeur de bande est obtenu en sommant une valeur obtenue en multipliant le coefficient de pondération par la largeur de bande disponible, et une valeur obtenue en multipliant la largeur de bande potentielle par le rapport entre la largeur de bande disponible et la largeur de bande totale.

5.  Système SLB selon l'une quelconque des revendications 2 à 4, dans lequel l'unité de calcul de poids de largeur de bande (320) applique la probabilité de terminaison de service de média à chaque largeur de bande qui est utilisée par chaque serveur de la pluralité de serveurs de média (130) afin de fournir les services de média, et calcule la largeur de bande potentielle en sommant chacune des largeurs de bande où la probabilité de terminaison de service de média est appliquée.

6.  Système SLB selon l'une quelconque des revendications 1 à 5, dans lequel l'unité de calcul de prévision de temps de file d'attente (330) calcule une prévision par rapport à un temps de lecture restant jusqu'à ce que des services de média fournis par la pluralité de serveurs de média (130) s'achèvent, en se basant sur la probabilité de terminaison de service de média, calcule la prévision par rapport au temps de file d'attente restant jusqu'à la pluralité de serveurs de média (130) fournisse à l'utilisateur les services de média, en utilisant la prévision par rapport au temps de lecture restante, et sélectionne le serveur de média ayant la prévision la plus petite par rapport au temps de file d'attente.

7.  Système SLB selon l'une quelconque des revendications 1 à 6, dans lequel l'unité de calcul de prévision de temps de file d'attente (330) convertit la probabilité de terminaison de service de média en une probabilité de terminaison en fonction d'un temps de lecture de chacun des services de média en appliquant un temps de lecture total des services de média fournis par la pluralité de serveurs de média (130) à la probabilité de terminaison de service de média, et calcule la prévision par rapport au temps de lecture restante en appliquant la probabilité de terminaison à un temps où le service de média est relu.

8.  Système SLB selon l'une des revendications 1 à 7, dans lequel l'unité de calcul de prévision de temps de file d'attente (330) calcule un temps de lecture restant moyen en appliquant la probabilité de terminaison de service de média à un temps de lecture de chaque service de la pluralité de services de média, forme une table du groupe où le temps de lecture de chacun des services de média est associé au temps de lecture restant moyen, en fonction d'un temps déjà lu, regroupe les services de média en se basant sur une longueur d'un temps de lecture total de chacun des services de média, et forme un tableau de temps de lecture total où un temps de lecture moyen est établi pour chaque groupe.

9.  Système SLB selon l'une des revendications 1 à 8, dans lequel l'unité de calcul de prévision de temps de file d'attente (330) extrait le temps de lecture restant moyen, associé à un temps où chacun des services de média est relu, d'après la table de groupe en fonction du temps déjà lu,

extrait le temps de lecture moyen, associé au temps de lecture total des services de média, à partir du tableau de temps de lecture total, et

calcule la prévision par rapport au temps de lecture restant en se basant sur le temps de lecture restant moyen et le temps de lecture moyen associé au temps de lecture total.

10. Système SLB selon l'une des revendications 1 à 9, dans lequel l'unité de calcul de prévision de temps de file d'attente (330) calcule séquentiellement la prévision par rapport au temps de file d'attente d'un service de média, inclus dans la file d'attente de chacun des serveurs de média (130), selon un ordre de la file d'attente, en se basant sur la prévision par rapport au temps de lecture restant du service de média fourni par chacun des serveurs de média (130) en temps réel.

11. Système SLB selon l'une des revendications 1 à 10, dans lequel l'unité de calcul de prévision de temps de file d'attente (330) calcule une valeur minimale de la prévision par rapport au temps de lecture restant de chacun des services de média, en tant que prévision en temps de file d'attente d'un service de média ayant une priorité la plus élevée dans la file d'attente, la prévision de temps de file d'attente indiquant une prévision par rapport à un temps de file d'attente restant,

calcule une prévision de temps de file d'attente maximal en sommant la prévision de temps de file d'attente et une prévision par rapport à un temps de lecture restant d'au moins un service de média ayant une priorité la plus élevée dans la file d'attente,

calcule une prévision minimale parmi la prévision de temps de file d'attente maximal et la prévision par rapport au temps de lecture restant, en tant que prévision de file d'attente d'un autre service de média inclus dans la file d'attente, et

sélectionne un serveur de média qui a une somme de prévisions la plus petite par rapport aux temps de file d'attente restants de tous les services de média inclus dans la file d'attente.

12. Procédé de SLB d'un service de média, le procédé de SLB comprenant les étapes suivantes:

calculer une probabilité de terminaison de service de média d'un utilisateur en fonction d'un temps de lecture de média en se basant sur des informations statistiques à propos d'un motif de changement de service de média ou d'une habitude de l'utilisateur ;
**caractérisé en ce que** le procédé de SLB comprend :

déterminer si une largeur de bande disponible, qui est une largeur de bande restante, existe dans chaque serveur d'une pluralité de serveurs de médias (S510) ;
calculer lorsque la largeur de bande disponible existe dans chacun des serveurs de média, un poids de largeur de bande (S550) en se basant sur la probabilité de terminaison de service de média, et la sélection d'un serveur de média ayant un poids de largeur de bande le plus élevé, le poids de largeur de bande étant obtenu en fournissant un poids à une largeur de bande de chaque serveur de la pluralité de serveurs de média ;
calculer, lorsque la largeur de bande disponible n'existe pas dans chacun des serveurs de média, une prévision par rapport à un temps de file d'attente (S540) restant jusqu'à ce que la pluralité de serveurs de média fournisse à l'utilisateur les services de média en se basant sur la probabilité de terminaison de service de média, et la sélection d'un serveur de média ayant une prévision minimale par rapport au temps de file d'attente ; et
connecter un serveur de média, sélectionné par une unité de calcul de poids de largeur de bande, au terminal de l'utilisateur, ou enregistrer un signal de demande de service de média dans une file d'attente du serveur de média sélectionné par une unité de calcul de prévision de temps de file d'attente.

13. Procédé SLB selon la revendication 12, dans lequel la sélection du serveur de média ayant le poids de largeur de bande le plus grand comprend :

appliquer la probabilité de terminaison de service de média à chaque largeur de bande qui est utilisée par chaque serveur de la pluralité de serveurs de média pour fournir le service de média ;
calculer une largeur de bande potentielle du serveur de média (S520) en sommant chacune des largeurs de bande où la probabilité de terminaison de service de média est appliquée ;
calculer un poids de largeur de bande (S550) de chaque serveur de la pluralité de serveurs de média utilisant la largeur de bande potentielle ; et

sélectionner un serveur de média ayant une largeur de bande potentielle la plus grande.

**14.** Procédé de SLB selon la revendication 12 ou 13, dans lequel la sélection du serveur de média ayant la prévision minimale comprend :

calculer une prévision par rapport à un temps de lecture (S530) restant jusqu'à ce que des services de média fournis par la pluralité de serveur de média s'achèvent, en se basant sur la probabilité de terminaison de service de média ;

calculer une prévision de temps de file d'attente d'un service de média (S540) ayant la priorité la plus élevée dans une file d'attente de la pluralité de serveurs de média, en utilisant la prévision par rapport au temps de lecture restant ;

calculer une prévision de temps de file d'attente supérieure en utilisant la prévision de temps de file d'attente et une prévision par rapport à un temps de lecture restant d'au moins un service de média ayant une priorité supérieure dans la file d'attente ;

calculer une prévision de temps de file d'attente d'un autre service de média, compris dans la file d'attente, en utilisant la prévision de temps de file d'attente supérieure et la prévision par rapport au temps de lecture restant du service de média fourni par chacun des serveurs de média ; et

sélectionner un serveur de média qui a une somme de prévision la plus petite par rapport à des temps de file d'attente restant de tous les services de média inclus dans la file d'attente.

# FIG. 1

USER
TERMINAL

CONTROL
SERVER

FIRST
MEDIA SERVER

SECOND
MEDIA SERVER

N<sup>TH</sup>
MEDIA SERVER

# FIG. 2

FIG. 3

# FIG. 4

420

| QUEUE | |
|---|---|
| ID | EXPECTATION OF REMAINING PLAY TIME |
| 6 | 2 |
| 7 | 4 |
| 8 | 10 |
| 9 | 5 |

410

| PROVIDED SERVICE | |
|---|---|
| ID | EXPECTATION OF REMAINING PLAY TIME |
| 1 | 6 |
| 2 | 12 |
| 3 | 7 |
| 4 | 14 |
| 5 | 9 |

130

⇩

130

430

| EXPECTATION OF QUEUE TIME | | | |
|---|---|---|---|
| ID | ID OF SESSIONS TO COMPARE -ID (EXPECTATION OF RETENTION TIME)- | SELECTION -ID- | EXPECTATION OF QUEUE TIME |
| 6 | 1(6) | 1 | 6 |
| 7 | 3(7) & 6(6·2) | 3 | 7 |
| 8 | 5(9) & 6(6·2) & 7(7·4) | 6 | 8 |
| 9 | 5(9) & 7(7·4) & 8(8·10) | 5 | 9 |
| 10 | 2(12) & 7(7·4) & 8(8·10) & 9(9·5) | 7 | 11 |

## FIG. 5

```
              ┌─────────────┐
              │    START    │
              └──────┬──────┘
                     │
                     ▼
S510         ◇ DOES AVAILABLE ◇ ─── NO ────────────────┐
             ◇ BANDWIDTH REMAIN? ◇                       │
                     │                                    │
                   YES                                    ▼
S520 ┌──────────────────────────┐   S530 ┌──────────────────────────────┐
     │   CALCULATE POTENTIAL     │        │  CALCULATE EXPECTATION        │
     │      BANDWIDTH            │        │  OF REMAINING PLAY TIME       │
     └──────────────┬───────────┘        └──────────────┬───────────────┘
                    │                                    │
S550 ┌──────────────────────────┐   S540 ┌──────────────────────────────┐
     │   CALCULATE BANDWIDTH     │        │  CALCULATE EXPECTATION        │
     │      WEIGHT              │        │  OF QUEUE TIME                │
     └──────────────┬───────────┘        └──────────────┬───────────────┘
                    │                                    │
S560 ┌──────────────────────────────────────┐           │
     │      PROVIDE MEDIA SERVICE            │◄──────────┘
     └──────────────┬───────────────────────┘
                    │
                    ▼
              ┌─────────────┐
              │    END      │
              └─────────────┘
```

**EP 2 299 643 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7353277 B1

**Non-patent literature cited in the description**

- **WANG FEI et al.** Optimized file-blocking storage scheme in clustered VoD system. *JISUANJI GONGCHENG = COMPUTER ENGINEERING, SHANGHAI JISUANJI XUEHUI, CH,* 05 November 2008, vol. 34 (21), 213-215